(19) Europäisches Patentamt / European Patent Office / Office européen des brevets

(11) **EP 3 037 002 A1**

(12) **EUROPEAN PATENT APPLICATION**
published in accordance with Art. 153(4) EPC

(43) Date of publication:
**29.06.2016 Bulletin 2016/26**

(51) Int Cl.:
***A23K 50/00*** (2016.01)    ***A23K 10/10*** (2016.01)

(21) Application number: **14820617.0**

(22) Date of filing: **30.06.2014**

(86) International application number:
**PCT/JP2014/067368**

(87) International publication number:
**WO 2015/002138 (08.01.2015 Gazette 2015/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **01.07.2013 JP 2013138503**

(71) Applicants:
• **Unicharm Corporation**
  **Ehime 799-0111 (JP)**
• **Kyushu Petfood Co. Ltd.**
  **Kasuya-gun, Fukuoka 811-0117 (JP)**

(72) Inventors:
• **KOBAYASHI Yosuke**
  **Itami-shi**
  **Hyogo 664-0831 (JP)**
• **ICHIHASHI Masaki**
  **Itami-shi**
  **Hyogo 664-0831 (JP)**
• **IWATA Sumihiro**
  **Kasuya-gun**
  **Fukuoka 811-0117 (JP)**

(74) Representative: **Dolleymores**
  **9 Rickmansworth Road**
  **Watford, Hertfordshire WD18 0JU (GB)**

(54) **PET FOOD AND METHOD FOR PRODUCING PET FOOD**

(57)    There is provided pet food including a core and a covering portion, in which the ratio of the hardness of the covering portion to the core is 2 or greater.

## FIG. 2

**Description**

Technical Field

The present invention relates to pet food and a method of producing pet food. More specifically, the present invention relates to pet food with an excellent chewy texture and a method of producing pet food.
Priority is claimed on Japanese Patent Application No. 2013-138503, filed July 1, 2013, the content of which is incorporated herein by reference.

Background Art

Among animals kept as pets, since there are a large number of animals having a strong desire to bite something, pet food which is extremely hard because of using cowhide and horse's Achilles tendons as raw ingredients has been widespread in order to satisfy such a desire of a pet. Further, pet food whose hard core is covered with hard jerky or the like has also been sold. However, PTL 1 discloses pet food formed by winding the skin of an animal around ingredients which become a core. However, even when pet food is fed to a pet, pet food is left uneaten in some cases when the pet does not like the pet food. Accordingly, pet food which is appetizing for pets is required to be developed.

Citation List

Patent Literature

[PTL 1] Japanese Unexamined Patent Application, First Publication 2000-175627

Summary of Invention

Technical Problem

The present invention has been made in consideration of the above-described problem, and an object thereof is to provide pet food not in the related art whose chewy texture can be enjoyed by pets.

Solution to Problem

The present inventors found that, among various types of pet food that has a core and a covering portion, pet food having two different types of chewy textures which can be enjoyed by pets can be obtained by increasing the ratio of the hardness of a core to a covering portion, thereby completing the present invention. In other words, the present invention is as follows.
(1) Pet food including: a core; and a covering portion, in which the ratio of the hardness of the covering portion to the core is 2 or greater.
(2) The pet food according to (1), in which the hardness of the core is in the range of 9.8 N to 392 N, and the hardness of the covering portion is in the range of 49 N to 980 N.
(3) The pet food according to (1) or (2), in which the core contains voids.
(4) The pet food according to any one of (1) to (3), in which the value of the ratio of an aggregability (A) of the core to a hardness (H) of the core is in the range of 0.003 to 0.03.
(5) The pet food according to any one of (1) to (4), in which the hardness (H) of the core is in the range of 9.8 N to 392 N, and the aggregability (A) thereof is in the range of 0.5 to 0.9.
(6) The pet food according to any one of (1) to (5), in which the value of the ratio of an elasticity (T) of the core to a hardness (H) of the core is in the range of 0.01 to 0.2.
(7) The pet food according to any one of (1) to (6), in which the hardness (H) of the core is in the range of 9.8 N to 392 N, and the elasticity (T) thereof is in the range of 0.5 to 1.0.
(8) The pet food according to any one of (1) to (7), in which the moisture content of the core is in the range of 10.0% by weight to 20.0% by weight.
(9) The pet food according to any one of (1) to (8), in which the density of the core is in the range of 0.02 g/cm$^3$ to 0.1 g/cm$^3$.
(10) The pet food according to any one of (1) to (9), in which at least a part of the core extends from the covering portion.
(11) The pet food according to any one of (1) to (10), in which the core is in the form of a rod.

(12) The pet food according to any one of (1) to (11), in which the ratio of the covering portion to the entirety of the pet food is 50% by weight or greater.

(13) The pet food according to any one of (1) to (12), in which the core contains 30.0% by weight or greater of cereals, 1.0% by weight or greater of processed starch, and 5.0% by weight or greater of a humectant.

(14) The pet food according to any one of (1) to (13), in which the covering portion contains glycerin and propylene glycol.

(15) The pet food according to any one of (1) to (14), in which the covering portion contains at least one raw ingredient selected from a group consisting of chicken, beef, pork, fish, and venison.

(16) A method of producing pet food according to any one of (1) to (15), including: a process (process I) of forming and swelling a core; a process (process II) of performing a heat treatment on the formed and swollen core; a process (process III) of forming a covering portion before covering; a process (process IV) of covering the core to which the heat treatment is applied with the covering portion before covering; and a process (process V) of performing a heat treatment on the entirety of the pet food after the core is covered with the covering portion.

Advantageous Effects of Invention

According to the pet food of the present invention, it is possible for a pet to enjoy two different types of chewy textures.

Brief Description of Drawings

FIG. 1 is a perspective view illustrating pet food according to an embodiment of the present invention.
FIG. 2 is a perspective view illustrating pet food according to another embodiment of the present invention.
FIG. 3 is a side view illustrating pet food according to still another embodiment of the present invention.
FIG. 4A is a front view illustrating pet food according to an embodiment of the present invention.
FIG. 4B is a front view illustrating pet food according to the embodiment of the present invention.
FIG. 4C is a front view illustrating pet food according to the embodiment of the present invention.
FIG. 5A is a front view illustrating a V-type plunger which can be used at the time of measuring the hardness, the aggregability, and the elasticity of pet food according to an embodiment of the present invention.
FIG. 5B is a side view illustrating a V-type plunger which can be used at the time of measuring the hardness, the aggregability, and the elasticity of pet food according to the embodiment of the present invention.
FIG. 6 is a view illustrating a chewing waveform obtained by measuring pet food using a physical property measuring machine.

Description of Embodiments

«Pet food»

Pet food according to an embodiment of the present invention is pet food including a core and a covering portion. The covering portion of the pet food of the present embodiment may cover at least a part of the outer periphery of the core, the entire core may be completely covered by the covering portion, or a part of the core may be exposed.

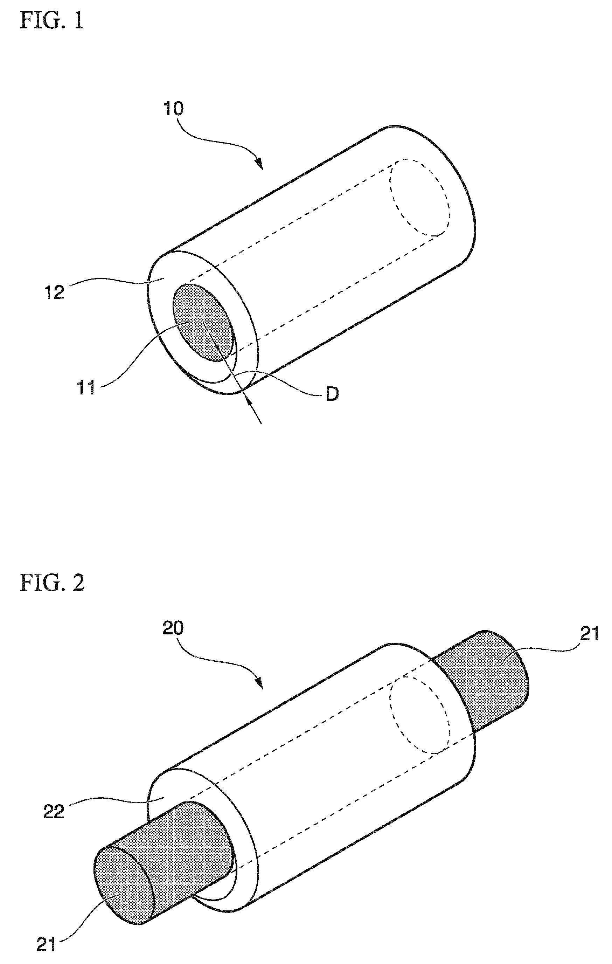

Pet food according to the present embodiment of the present invention is illustrated in FIG. 1. As illustrated in FIG. 1, pet food 10 has a cylindrical shape made by the outer periphery of a core 11 being covered by a covering portion 12.

Pet food according to another embodiment of the present invention is illustrated in FIG. 2. As illustrated in FIG. 2, at least a part of a core 21 of pet food 20 is extended from a covering portion 22.

Moreover, in the pet food 10 and 20 according to the embodiments illustrated in FIGS. 1 and 2, the shape of the cores 11 and 21 is cylindrical, but the shape of the core of the pet food can be optionally selected from a rod shape, a plate shape, a spherical shape, a tubular shape, a cylindrical shape, and a cone shape.

The shape of the core is not particularly limited, but a rod-like core whose section is approximately circular and which has a diameter (the maximum diameter and the minimum diameter are both included, the same applies hereinafter) of 3 mm to 15 mm and a length of 1 cm to 20 cm is preferable, a rod-like core which has a diameter of 4 mm to 12 mm and a length of 3 cm to 15 cm is more preferable, and a rod-like core which has a diameter of 6 mm to 8 mm and a length of 7 cm to 10 cm is still more preferable. When the pet food has the above-described shape, since the pet food with this shape is easily eaten by pets and pets can gnaw the pet food from the tip portion thereof little by little, the pets can bite the pet food for a long period of time.

The shape of the covering portion is not particularly limited as long as the covering portion can cover the core.

The thickness of the covering portion (the thickness of the core in a direction perpendicular to the outer peripheral surface) illustrated in D of FIG. 1 is preferably in the range of 1 mm to 15 mm, more preferably in the range of 2 mm to 10 mm, and still more preferably in the range of 2 mm to 8 mm.

In the pet food according to the embodiment illustrated in FIG. 2, the length of a portion extended from the covering portion 22 of the core 21, which is not particularly limited, is preferably in the range of 5 mm to 25 mm, more preferably in the range of 10 mm to 20 mm, and still more preferably in the range of 12 mm to 18 mm.

In a case where the pet food according to the present embodiment has a shape in which at least a part of the core is extended from the covering portion as illustrated in FIG. 2, it is possible for a pet to initially bite the extended core easily. In addition, since the core of the pet food of the present invention is softer than the covering portion, it is possible to improve the impression of ease of biting of a pet with respect to the pet food. Further, since a pet bites only the core and then bites the covering portion, two different types of chewy textures can be easily obtained.

In the pet food according to the present embodiment, the ratio of the hardness of the covering portion to the core is 2 or greater. The ratio of the hardness of the covering portion to the core is preferably in the range of 2 to 30, more preferably in the range of 4 to 20, still more preferably in the range of 7 to 12, and particularly preferably in the range of 8 to 10.

A pet can enjoy a chewy texture having two different types of hardness by separately putting and biting the core or the covering portion in the mouth or by putting the core and the covering portion in the mouth at the same time and separately biting the core or the covering portion.

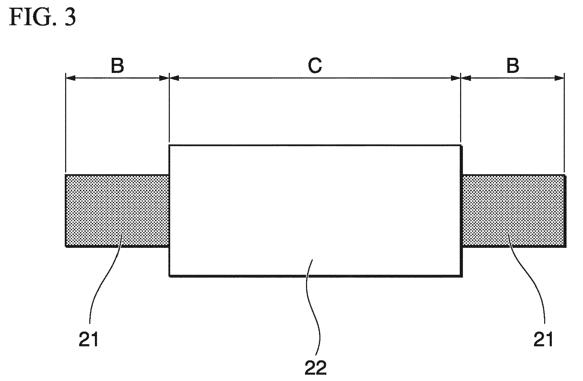

A measuring portion with respect to the core and the covering portion in a state of covering the core will be described with reference to FIG. 3. In a case where the core is extended from the covering portion as illustrated in FIG. 3, measurement with respect to the core may be performed on a portion (that is, a portion protruding further than the covering portion when seen from a side view of the pet food) shown by B in FIG. 3. Specifically, measurement can be performed by pressing a plunger of a texturometer to any of the B portion in FIG. 3. In a case where the core portion is completely covered with the covering portion, it is preferable that the measurement is performed by peeling the covering portion from the core and exposing the core.

In the same manner, the measurement with respect to the covering portion in a state of covering the core may be performed on a portion shown by C in FIG. 3. Specifically, measurement can be performed by pressing a plunger of a texturometer to a portion of the C portion in FIG. 3.

It is preferable that the measurement with respect to the covering portion is performed on only the covering portion by peeling the covering portion from the core, but the covering portion in a state of covering the core is measured and the measured value may be set as the hardness of the covering portion unless the measured value is significantly affected.

In the present embodiment, the hardness can be acquired as a numerical value read from the chewing wave obtained by performing measurement under the following measurement conditions using a physical property measuring machine described below. The aggregability and the elasticity are as follows.

<Physical property measuring device> manufacturing company: Takemoto Denki Corporation, electrical device: TEXTUROMETER (model No: GTX-2)

<Measurement conditions>

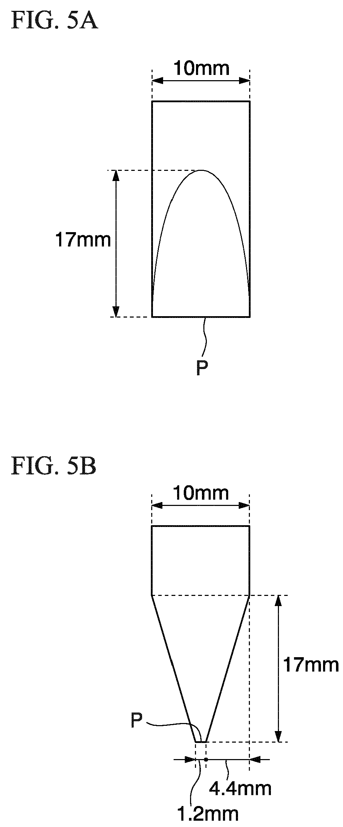

Plunger: plunger (chromium V type) illustrated in FIGS. 5A and 5B, a contact surface P in which the plunger is brought into contact with the pet food is a V-type (wedge-shape)
Platform: flat plate
Clearance (most compression point): bitten up to 80% of the diameter of a portion to be measured
Output: 1 V
BITE SPEED: LOW (6 times/min)
Number of times of chewing: chewing three times

<Measurement method>

Pet food is placed on the flat plate, and the plunger is pressed into the pet food from the upper portion such that a load is applied thereto. At this time, it is set that up to 80% (clearance) of the diameter of the portion to be measured in the pet food is bitten.

<Numerical value being read from chewing waveform>

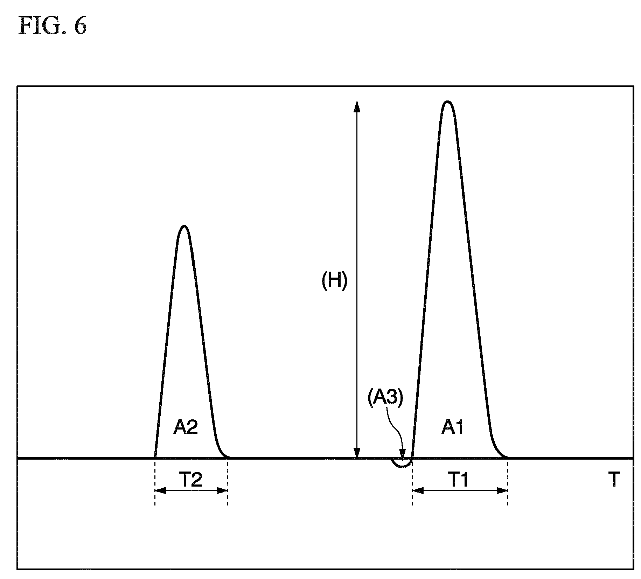

In the chewing waveform illustrated in FIG. 6, the hardness, the aggregability, and the elasticity are acquired as follows.

Time (T): In FIG. 6, it means that the time has elapsed toward the left from the right of the horizontal axis.
Hardness (H): the maximum value in the height of the waveform at the first time of chewing
Aggregability (A2/A1): {the area (A2) of the waveform at the second time of chewing/the area (A1) of the waveform at the first time of chewing}
Elasticity (T2/T1): {the time (T2) at the second time of chewing/the time (T1) at the first time of chewing}

In the chewing waveform illustrated in Fig. 6, it is considered that the reason why the relationship of "T1 > T2" is satisfied is that the pet food is collapsed and becomes softened by the first time of chewing or the thickness of the pet food becomes smaller.

In the chewing waveform illustrated in FIG. 6, the respective measured values have the following definitions.

The hardness (H) indicates the maximum test force at the time when a load is applied to the pet food using a plunger. The unit thereof is a newton (N). The hardness indicates the physical hardness of the pet food.

Adhesiveness (A3) indicates the force that is represented by an area on the negative side (lower side of the horizontal axis) in the chewing waveform and is required for the plunger, which is pressed to the pet food, to be pulled back. The adhesiveness (A3) indicates the force of pulling the pet food apart by means of touching the pet food by hand or being adhered to the chewing teeth, the tongue, or the oral cavity. The unit thereof is a newton (N).

The aggregability (A2/A1) indicates the ratio of an area (energy) to which a load is applied for the first time to an area to which a load is applied for the second time when a load is continuously applied to the pet food two times. The aggregability (A2/A1) indicates the cohesive force of the organization of the pet food or the difficulty of the pet food to collapse. There is no unit for the aggregability (A2/A1) (dimensionless quantity).

The elasticity (T2/T1) indicates the ratio of the time (time for which a sensor is reacted) for which a load is applied to the pet food during each time of chewing when a load is continuously applied to the pet food using the plunger two times. There is no unit for elasticity (T2/T1) (dimensionless quantity).

Further, in a case where the number of times of chewing is n times, this value is calculated as the aggregability (An/A1) and the elasticity (Tn/T1).

In the present specification and claims, the unit of the numerical value of the hardness is converted to newtons (N) by multiplying the numerical value of the hardness (kgw) acquired from the chewing waveform measured using the TEXTUROMETER (model No: GTX-2) by 9.8.

In the present embodiment, the hardness, the aggregability, and the elasticity can be acquired based on the chewing waveform obtained by performing measurement under the same conditions as the above-described measurement conditions or compatible conditions in a case where a physical property measuring device (texturometer) other than that described above is used.

In the present embodiment, a method of acquiring the hardness, the aggregability, and the elasticity is in conformity with a texture profile of Szczesniak (Szczesniak, A. S.: J. Food Sci., 28, 385 (1963)). Szczesniak organized and systematized the terminology related to the chewy texture in General Foods Corp. in the United States and showed a correlation between measured values using the texturometer and functional evaluation values of a person (Szczesniak, A. S., Blandt, M. A. & Freidman, H. H. : J. Food Sci., 28, 397 (1963)).

The hardness of the core and the hardness of the covering portion of the pet food according to the present embodiment are not particularly limited as long as the ratio of the hardness of the covering portion to the core is 2 or greater, but the hardness in a level in which a pet can safely bite the pet food is preferable. For example, the hardness of the core is preferably in the range of 9.8 N to 980 N, more preferably in the range of 9.8 N to 392 N, and still more preferably in the range of 9.8 N to 196N. The hardness of the covering portion is preferably in the range of 49 N to 980 N, more preferably in the range of 147 N to 441 N, still more preferably in the range of 196 N to 392 N, and particularly preferably in the range of 245 N to 343 N.

As pet food having a core and a covering portion in the related art, pet food formed by winding a hard covering portion such as jerky or the like around a hard core is exemplified as normal pet food. However, in pet food of the related art whose core has a large value of hardness, in a case of pets with weak biting force, for example, young pets, small pets, and old pets, the pets give up biting the core because of the extreme hardness of the core and leave the pet food uneaten in some cases.

Meanwhile, in a case of pet food whose hardness of the core is in the range of 9.8 N to 392 N and which is softer than pet food of the related art, young pets or old pets easily eat the pet food and do not easily give up biting the core.

Moreover, in the pet food according to the present embodiment, since the ratio of the hardness of the covering portion to the core (hardness of covering portion/hardness of core) is 2 or greater, it is possible to satisfy the desire of pets that want to bite the pet food using the moderate hardness of the covering portion even in a case of a soft core having a hardness of 9.8 N to 392 N.

Further, from the reverse viewpoint, since the pet food according to the present embodiment is pet food in which the ratio of the hardness of the covering portion to the core is 2 or greater, it can be said that the core has moderate softness even when the covering portion is hard. Accordingly, even when a pet bites into the hard covering portion, the pet can feel the softness of the core from the top of the covering portion by strongly biting into the pet food and it is possible to make a pet continuously bite the entirety of the pet food for a long period of time even in a case of a pet that has difficulty with hard pet food.

The aggregability of the core of the pet food according to the present embodiment and the covering portion in a state of covering the core portion is not particularly limited, but the aggregability of the core is preferably in the range of 0.5 to 0.9 and the aggregability of the covering portion in a state of covering the core is preferably in the range of 0.6 to 1.0. The aggregability of the core is more preferably in the range of 0.5 to 0.8 and still more preferably in the range of 0.5 to 0.7. The aggregability of the covering portion in a state of covering the core is more preferably in the range of 0.6 to 0.9 and still more preferably in the range of 0.7 to 0.9.

It is possible to easily grasp the value of the aggregability when the difficulty of pet food to be masticated is shown. Since pet food having a high aggregability is less likely to be masticated by a pet, the high aggregability indicates that a pet can bite the pet food for a long period of time. In a case where the aggregability of the core and/or the covering portion in a state of covering the core is in the range of 0.7 to 0.9, a pet can continuously bite the pet food for a long period of time without immediately masticating the pet food. That is, even in a case where the aggregability of the core is 0.7 or less, a pet can bite the entirety of the pet food for a long period of time when the aggregability of the covering portion is high.

In a case of pet food whose core has a high aggregability and is soft, a pet is unlikely to give up biting the pet food and the pet food is difficult to break apart. Such pet food has a core which can be bitten without getting tired of it.

Specifically, the value of the ratio of the aggregability (A) of the core to the hardness (H) of the core of the pet food according to the present embodiment is preferably in the range of 0.003 to 0.03, more preferably in the range of 0.005 to 0.026, and still more preferably in the range of 0.01 to 0.02.

Further, in a case of a core which is softer than that of pet food in the related art and has an aggregability greater than or equal to that of pet food in the related art, pets with weak biting force such as young pets, small pets, or old pets can easily eat the core and are unlikely to give up biting, and the core is difficult to break apart and can be bitten by the pets without getting tired of it for a long period of time. That is, in the pet food according to the present embodiment, the hardness (H) of the core is preferably in the range of 9.8 N to 392 N and the aggregability (A) thereof is preferably in the range of 0.5 to 0.9, the hardness (H) of the core is more preferably in the range of 9.8 N to 196 N and the aggregability (A) thereof is more preferably in the range of 0.5 to 0.8, and the hardness (H) of the core is still more preferably in the range of 9.8 N to 98 N and the aggregability (A) thereof is still more preferably in the range of 0.5 to 0.7.

The elasticity of the core and the covering portion in a state of covering the core of the pet food according to the present embodiment is not particularly limited, but the elasticity of the core is preferably in the range of 0.5 to 1.0 and the elasticity of the covering portion in a state of the core is preferably in the range of 0.6 to 1.0. The elasticity of the core is more preferably in the range of 0.8 to 1.0 and still more preferably in the range of 0.9 to 1.0. The elasticity of the covering portion in a state of covering the core is more preferably in the range of 0.7 to 1.0 and still more preferably in the range of 0.8 to 0.9.

In a case where the elasticity is in the above-described range, a pet can enjoy the chewy texture.

The core which has a high elasticity and is soft can be easily eaten by a pet and has an excellent chewy texture. That is, the value of the ratio of the elasticity (T) to the hardness (H) of the pet food according to the present embodiment is preferably in the range of 0.01 to 0.2, more preferably in the range of 0.01 to 0.1, and still more preferably in the range of 0.01 to 0.04.

Further, in a case of a core which is softer than that of pet food in the related art and has an elasticity of the core greater than or equal to that of pet food in the related art, pets with weak biting force such as young pets, small pets, or old pets can easily eat the core and are unlikely to give up biting, and the chewy texture of the core becomes excellent. That is, in the pet food according to the present embodiment, the hardness (H) of the core is preferably in the range of 9.8 N to 392 N and the elasticity (T) thereof is preferably in the range of 0.5 to 1.0, the hardness (H) of the core is more preferably in the range of 9.8 N to 196 N and the elasticity (T) thereof is more preferably in the range of 0.8 to 1.0, and the hardness (H) of the core is still more preferably in the range of 9.8 N to 98 N and the elasticity (T) thereof is still more preferably in the range of 0.9 to 1.0.

The core of the pet food according to the present embodiment may contain voids. It is preferable that the voids are uniformly distributed in the entire core. When the core contains voids, softness, elasticity, or brittleness of bread or a sponge can be provided for the core and the core can be more easily bitten by a pet.

In addition, the moisture content of the core of the pet food according to the present embodiment, which is not particularly limited, is preferably in the range of 10.0% by weight to 20.0% by weight, more preferably in the range of 14.0% by weight to 19.0% by weight, and still more preferably in the range of 16.0% by weight to 18.0% by weight.

When the moisture content of the core is in the above-described range, the softness and elasticity which allows the pet food to be easily chewed by a pet can be provided for the core. When the core has moderate softness and moderate elasticity, a pet can enjoy the chewy texture of the core. In addition, when the moisture content of the core is in the above-described range, the aggregability of the core can be increased and a pet is unlikely to break apart the core even though the core is soft. Accordingly, a pet can continuously bite the pet food for a long period of time.

In a case where the moisture content of the core is less than 10.0% by weight, the core occasionally becomes hard and this is not preferable for pets that have difficulty with hard pet food, for example, young pets and old pets. Further, since the core becomes brittle, a pet cannot chew the core only for a short period of time and the elasticity is degraded, and the chewy texture is degraded.

In the present specification, the moisture content (% by weight) of the produced pet food is measured by a normal pressure heating and drying method described above.

«Normal pressure heating and drying method»

The weight (W1 gram) of an aluminum weighing can is measured as a constant weight value in advance. A sample is put in the aluminum weighing can and the weight thereof (W2 grams) is weighed. Next, the sample is dried under the temperature condition of 135°C for 2 hours using a forced circulation type hot air drier. The sample is left to be cooled in a dry atmosphere (silica gel desiccator) and the weight (W3 grams) is weighed. The moisture content is acquired using the following formula from the obtained respective weights.

$$\text{Moisture content } (\%) = [(W2 - W3)/(W2 - W1)] \times 100$$

The density of the core of the pet food according to the present embodiment, which is not particularly limited, is preferably in the range of 0.13 g/cm$^3$ to 0.01 g/cm$^3$, more preferably in the range of 0.02 g/cm$^3$ to 0.10 g/cm$^3$, and still more preferably in the range of 0.03 g/cm$^3$ to 0.05 g/cm$^3$.

The density in the present specification is calculated using the following formula.

$$\text{Density } (g/cm^3) = \text{mass of test specimen (g)/volume of test specimen } (cm^3)$$

As the test specimen in the formula, a test specimen having a predetermined size is cut out from the pet food, the volume thereof is calculated from the outer diameter and the length, and the mass is measured.

Since a core whose density is in the above-described range has preferable softness, elasticity, and aggregability, a core which is easily bitten by a pet can be obtained.

Further, the ratio of the covering portion to the entirety of the pet food is preferably 50% by weight or greater, more preferably 60% by weight or greater, and still more preferably 65% by weight or greater. By increasing the covering portion, it is possible to provide a luxurious impression for a pet and the owner. Moreover, since the covering portion is a portion which is frequently and directly brought into contact with the tongue of a pet, the covering portion is produced from ingredients having high palatability. Consequently, the palatability for the pet food can be further improved by increasing the ratio of the covering portion.

(Raw ingredients of pet food)

The raw ingredients constituting the pet food are not particularly limited, and raw ingredients being used for pet food in the related art can be applied.

The core of the pet food according to the present embodiment may contain cereals, processed starch, and a humectant. The types and the contents of the cereals, the processed starch, and the humectant are not particularly limited as long as they are used for food, and various kinds of cereals, processed starch, and humectants can be used.

In regard to the above-described cereals, the core of the pet food contains preferably 30.0% by weight or greater of the cereals, more preferably in the range of 40% by weight to 80% by weight, and still more preferably in the range of 50% by weight to 70% by weight. The cereals mentioned here indicate plants whose seeds are used for food such as rice, wheat, corn, buckwheat, and beans or a product using cereals as raw ingredients. When the core contains cereals, the swelling (puffing) of the core can be promoted. In a case where the core contains 30.0% by weight or greater of cereals, the degree of swelling becomes more preferable and a core with a chewy texture having excellent softness and lightness can be produced.

In regard to the above-described processed starch, the core of the pet food contains preferably 1.0% by weight or greater of the processed starch, more preferably 1.0% by weight to 10.0% by weight, and still more preferably 5.0% by weight to 9.0% by weight. When processed starch is used, various kinds of chewy textures can be provided for the core. The processed starch here indicates starch obtained by performing an artificial treatment on starch and modifying the original properties of the starch. As the processed starch, various kinds of processed starches such as cross-linked starch, oxidized starch, phosphorylated starch, and acetylated starch can be used. Particularly, the acetylated starch can prevent aging of starch and provide a chewy texture to the core and thus the acetylated starch can be suitably used. Examples of the acetylated starch include acetylated adipate cross-linked starch, acetylated oxidized starch, and acetylated phosphate cross-linked starch.

Examples of processed starch which is preferable to be contained in the core include sodium octenyl succinate starch, acetate starch, oxidized starch, hydroxypropylated phosphoric acid cross-linked starch, hydroxypropyl starch, phosphoric acid cross-linked starch, phosphorylated starch, and phosphoric acid monoesterified phosphoric acid cross-linked starch.

In regard to the humectant, since a core which is soft and has elasticity can be easily obtained, the core contains preferably 5.0% by weight or greater of the humectant, more preferably in the range of 5.0% by weight to 20.0% by weight of the humectant, still more preferably in the range of 8.0% by weight to 15.0% by weight, and particularly preferably in the range of 10.0% by weight to 13.0% by weight. The humectant contained in the core is not particularly limited, but glycerin or propylene glycol is preferable.

Moreover, the pet food according to the present embodiment may contain trehalose. When the pet food contains trehalose, it is possible to suitably maintain the moisture contents of the core portion and the covering portion. In addition, when the pet food contains trehalose, it is possible to prevent aging of starch contained in the pet food.

The covering portion of the pet food according to the present embodiment may contain glycerin and propylene glycol. Since propylene glycol has a bacteriostatic action, the pet food can be stored for a long period of time when propylene glycol is used.

Further, glycerin and propylene glycol can be used as a humectant. As the humectant, saccharides such as glucose, fructose, and sucrose can be used, but sugar alcohol such as glycerin or propylene glycol is more preferably used. Since the covering portion is a portion that greatly affects the appearance of the pet food, an appetizing appearance is also important. In a case where saccharides are used as a humectant, since saccharides are compounds including a carbonyl group, a Maillard reaction with an amino group of protein occurs, the color of the covering portion is changed to brown, and thus the appearance thereof may be degraded. Meanwhile, in a case where sugar alcohol is used as a humectant, since sugar alcohol is a compound which does not include a carbonyl group, the Maillard reaction does not occur, the original hue of ingredients of the raw ingredients constituting the covering portion can be maintained, and thus pet food with an excellent appearance can be obtained.

The covering portion of the pet food according to the present embodiment may contain at least one raw ingredient selected from a group consisting of chicken, beef, pork, fish, and venison. Since these various types of meats are ingredients with high palatability of a pet, the palatability of a pet for the pet food can be improved when the meat is used as raw ingredients of the covering portion. In addition, since the meat contains a large amount of protein, the covering portion can have hardness with chewability through a heat treatment and a drying treatment. Each covering portion contains preferably 50.0% by weight or greater of the meat, more preferably 60.0% by weight or greater of the meat, and still more preferably 65.0% by weight or greater of the meat.

Appropriate seasonings such as salts or amino acids may be added to the covering portion in addition to the humectant and the meat.

«Method of producing pet food»

A method of producing pet food according to the present embodiment includes a process of forming and swelling a core (process I); a process of performing a heat treatment on the formed and swollen core (process II); a process of forming a covering portion before covering (process III); a process of covering the core to which the heat treatment is applied with the covering portion before covering (process IV); and a process of performing a heat treatment on the entirety of pet food after the core is covered with the covering portion (process V).

Hereinafter, respective processes will be described.

<Process I>

The raw ingredients of the core are finely pulverized using a grinder or the like. At this time, a known method of pulverizing and mixing raw ingredients using a mixer or the like can be applied. During the forming and swelling, it is preferable that a known extruder (extruder) is applied. For example, after the mixture is pressed using an extruder, the mixture is released to the air at the same time with the forming such that the pressure is drastically reduced, water vapor in the mixture is swollen, and voids can be contained in the core. In a case where an extruder is used, the mixture may be heated or water may be added to the mixture as needed.

As the raw ingredients of the core, ingredients which are normally used at the time of producing pet food can be applied. The raw ingredients of the core may include cereals such as the above-described rice, wheat, corn, buckwheat, or beans; and meat such as chicken, beef, pork, fish, or venison. As important nutrients contained in meat and cereals, protein and carbohydrates are exemplified. As the carbohydrates, carbohydrates derived from a processed product such as processed starch can be exemplified. Since these cereals may contain protein, ash, minerals, vitamins, and the like in addition to carbohydrates, the cereals can be used as a nutrient source.

As the raw ingredients of the core, extracts of vitamins and minerals, salts, fats, and animal proteins may be added to the mix in addition to the protein and the carbohydrate, and optional components such as perfumes, seasonings, colorants, oils and fats, emulsifying agents, pH adjusting agents, leavening agents, and antioxidants may be blended with the mixture as needed. In addition, from viewpoints of allowing the core to maintain moisture and providing a preferable chewy texture, a humectant such as sorbitol or glycerin may be used as the raw ingredient of the core.

The raw ingredients of the core can be mixed with each other according to the combination (% by weight) listed in Table 1.

[Table 1]

| Raw ingredients of core | |
|---|---|
| Cereals (corn, wheat, barley, oats, rice, soybeans, and the like) | 60-70% |
| Meat and seafood (chicken, pork, beef, tuna, bonito, and the like) | 10-20% |
| Humectants (sorbitol, glycerin, and the like) | 5-15% |
| Other raw ingredients (seasonings, colorants, oils and fats, emulsifying agents, pH adjusting agents, antioxidents, and the like) | 5-15% |
| Total | 100% |

The shape of the core is not particularly limited, but a rod-like core whose section is approximately circular and which has a diameter of 3 mm to 15 mm and a length of 1 cm to 20 cm is preferable, a rod-like core which has a diameter of 4 mm to 12 mm and a length of 3 cm to 15 cm is more preferable, and a rod-like core which has a diameter of 6 mm to 8 mm and a length of 7 cm to 10 cm is still more preferable. When the pet food has the above-described shape, the pet food with this shape is easily eaten by pets, pets can bite the pet food for a long period of time, and the shape thereof can be easily handled in the following processes II and IV, which is preferable.

<Process II>

A method of performing a heat treatment on the formed and swollen core is not particularly limited, but a method of moderately drying the core, that is, a method of heating the core in an oven or the like or a method of heating the core by blowing hot air is preferable from a viewpoint of handleability in the following process. From a viewpoint of providing softness for the core, a method of heating the core by drying the same under reduced pressure is more preferable.

The heating temperature of the heat treatment, which is not particularly limited, is preferably 100°C or less, more preferably in the range of 50°C to 80°C, and still more preferably in the range of 60°C to 70°C.

In a case where the heat treatment is carried out at the above-described temperature, the time of the heat treatment is preferably 1 minute to 120 minutes, more preferably in the range of 15 minutes to 90 minutes, and still more preferably in the range of 20 minutes to 60 minutes.

<Process III>

In the forming of the covering portion before the covering, for example, the ingredients of the covering portion are finely cut using a known mincing machine or the like and mixed with each other to obtain a mixture of the raw ingredients of the covering portion, and then the mixture may be punched to have a desired shape.

The shape of the sheet is not particularly limited, but the thickness thereof is preferably in the range of 1 mm to 15 mm, more preferably in the range of 2 mm to 10 mm, and still more preferably in the range of 3 mm to 7 mm.

As the raw ingredients of the covering portion, ingredients which are normally used at the time of producing pet food can be applied. The raw ingredients of the covering portion may include meat such as chicken, beef, pork, fish, or venison. In addition, from viewpoints of allowing the covering portion to maintain moisture and providing a preferable chewy texture, a humectant such as sorbitol or glycerin may be used as the raw ingredient of the covering portion. Moreover, if necessary, optional components such as perfumes, seasonings, colorants, oils and fats, emulsifying agents, pH adjusting agents, antioxidants, and preservatives may be blended.

The raw ingredients of the covering portion can be mixed with each other according to the combination (% by weight) listed in Table 2.

[Table 2]

| Raw ingredients of covering portion | |
|---|---|
| Meat and seafood (chicken, pork, beef, tuna, bonito, and the like) | 80-95% |
| Humectants (sorbitol, glycerin, and the like) | 1-10% |
| Other raw ingredients (seasonings, colorants, oils and fats, emulsifying agents, pH adjusting agents, antioxidents, and the like) | 1-10% |
| Total | 100% |

<Process IV>

The method of covering the core with the covering portion is not particularly limited. For example, the core may be covered with the covering portion by embedding the core into the formed covering portion or winding the covering portion around the core.

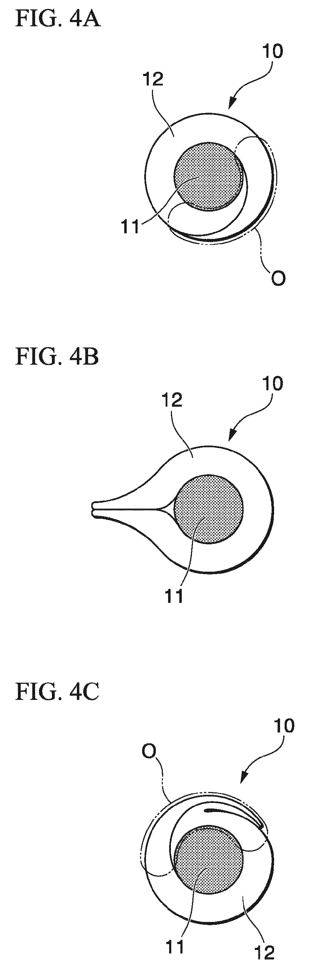

In the process of covering the core with the covering portion before covering, the core may be covered with the covering portion, for example, as illustrated in FIGS. 4A to 4C. Further, as the method of covering the core with the covering portion, the covering may be performed by forming a portion obtained by covering the core with at least two layers of the covering portion. The portion obtained by covering the core with at least two layers of the covering portion indicates, for example, a portion of O in FIGS. 4A and 4C. In the case where the covering portion is wound around the core, for example, the portion obtained by covering the core with at least two layers of the covering portion can be formed by bending the covering portion two or more times. The adhesiveness of the core to the covering portion can be improved by forming the portion obtained by covering the core with at least two covering portions. In addition, as described above, in the case where the raw ingredients of the covering portion are finely cut using a mincing machine or the like, since the formed covering portion is easily deformed along the shape of the core, the adhesiveness can be improved. When the adhesiveness of the core to the covering portion is improved, two different types of chewy textures of the core and the covering portion can be simultaneously enjoyed by a pet.

<Process V>

The covering portion can be thermally solidified by performing a heat treatment on the entirety of the pet food after the core is covered with the covering portion. In this manner, the state of the core being covered with the covering portion can be maintained. Further, in the process of performing the heat treatment, the moisture content in the entirety of the pet food may be adjusted to a desired amount. The method of performing the heat treatment on the entirety of the pet food is not particularly limited, and a method of steaming the pet food with water vapor, a method of heating the pet food in an oven or the like, or a method of heating the pet food by blowing hot air can be exemplified. For example, in a case where the method of steaming the pet food with water vapor is employed, the moisture content of the pet food can be increased to a desired amount. In addition, in a case where the method of heating the pet food in an oven or the like or the method of heating the pet food by blowing hot air is employed, the moisture content of the pet food can be reduced to a desired amount.

In the present specification and claims, the term "pets" indicate animals that have been bred by people. In a narrower sense, pets are animals being cared for by their owners. Further, the term "pet food" indicates feed for pets. The pet food of the present invention can be sold as "animal feed" or "animal food."

Examples

The present invention will be described in detail with reference to examples described below, but the present invention is not limited to the following examples.

Unless otherwise noted, production of pet food and measurement of the physical properties thereof in the examples were carried out at room temperature (20°C to 25°C).

[Example 1]

First, chicken, wheat flour, bread crumbs, processed starch (acetylated starch), a processed soybean product (soybean protein, defatted soybeans, or soybean powder), a humectant (glycerin or propylene glycol), a leavening agent (multilayer), oils and fats (safflower oil), trehalose, and other raw ingredients (seasonings, colorants, emulsifying agents, pH adjusting agents, and antioxidants) were mixed with each other at the blending ratios listed in Table 3, thereby obtaining a mixture of the raw ingredients of the core. Next, the mixture of the raw ingredients of the core was pressurized, released into air at the same time as the formation, and a rod-like core having a diameter of 8 mm and a length of 9.5 cm with voids therein was obtained using an extruder. The obtained core was dried under reduced pressure by blowing hot air at 68°C for 30 minutes.

[Table 3]

| | Raw ingredients | |
|---|---|---|
| Core | Chicken | 15.2% |
| | Wheat flour | 30.4% |
| | Bread crumbs | 7.6% |
| | Processed starch (acetylated starch) | 7.6% |
| | Processed soybean product (soybean protein, defatted soybeans, or soybean powder) | 22.0% |
| | Leavening agent (multilayer) | 0.3% |
| | Oils and fats (safflower oil) | 0.4% |
| | Trehalose | 1.5% |
| | Humectant (glycerin or propylene glycol) | 12.3% |
| | Other raw ingredients (seasonings, colorants, emulsifying agents, pH adjusting agents, and antioxidants) | 2.7% |
| | Total of core | 100% |
| Covering portion | Chicken | 93.0% |
| | Humectant (glycerin or propylene glycol) | 6.8% |
| | Other raw ingredients (seasonings and preservatives) | 0.2% |
| | Total of covering portion | 100% |

Chicken, a humectant (propylene glycol), and other raw ingredients (seasonings or preservatives) were mixed with each other at blending ratios listed in Table 3, thereby obtaining a mixture of the raw ingredients of the covering portion. In addition, the chicken was finely cut using a mincing machine and mixed with other ingredients of the covering portion using a mixer. Next, the mixture of the raw ingredients of the covering portion was punched and then a covering portion whose thickness was processed to be 5 mm in the form of a sheet was obtained.

The core was covered with the covering portion by positioning the core in the vicinity of the center of the upper surface of the processed covering portion in the form of a sheet, covering the upper surface of the core with the covering portion such that an arbitrary end of the covering portion approached an end of the opposite side, performing the same process on the end of the opposite side, and forming a portion obtained by covering the core with two layers of the covering portion and a portion obtained by covering the core with one layer of the covering portion. At this time, at least a part of the core was prepared so as to be extended from the covering portion.

The covering portion was thermally solidified by blowing hot air to the entirety of the pet food after the core was covered with the covering portion and performing a heat treatment at 68°C for 12 hours (drying the pet food under reduced pressure). The heat treatment was carried out until the final moisture content of the core became 17.8% by weight and the moisture content of the entirety of the pet food became 17.0% by weight, thereby obtaining the pet food of Example 1.

[Comparative Examples 1 and 2]

Pet foods having commercially available cores and covering portions were obtained, the hardness of these cores was measured, and then two products with cores having the lowest hardness were obtained in Comparative Examples 1 and 2.

<Measurement of hardness, aggregability, and elasticity>

The hardness, the aggregability, and the elasticity of the cores and covering portions of the pet food in Example 1 and Comparative Examples 1 and 2 were measured. The measurement was performed using a TEXTUROMETER (model number: GTX-2, manufactured by Takemoto Denki Corporation) as described above. The number of times of chewing was three times. Further, measurement was performed on the covering portion in a state of covering the core. The measurement results are listed in Table 4.

<Measurement of density of core>

The density of the cores of the pet food in Example 1 and Comparative Examples 1 and 2 was measured. The measurement results are listed in Table 4.

[Table 4]

| | Example 1 | | Comparative Example 1 | | Comparative Example 2 | |
|---|---|---|---|---|---|---|
| | Core | Covering portion | Core | Covering portion | Core | Covering portion |
| Hardness (H) (N) | 32.3 | 294.0 | 604.7 | 718.3 | 404.7 | 522.3 |
| Hardness (H) of covering portion to hardness (H) of core | 9.1 | | 1.2 | | 1.3 | |
| Aggregability (A) | 0.62 | 0.80 | 0.70 | 0.76 | 0.82 | 0.80 |
| Aggregability (A) of core to hardness (H) 1 of core | 0.019 | - | 0.0012 | - | 0.0020 | - |
| Elasticity (T) | 0.94 | 0.89 | 0.86 | 0.94 | 0.89 | 0.92 |
| Elasticity (T) of core to hardness (H) 1 of core | 0.029 | - | 0.0014 | - | 0.0022 | - |
| Density of core (g/cm$^3$) | 0.04 | - | 0.15 | - | 0.14 | - |

From the results described above, it is understood that the ratio of the hardness of the core to the covering portion of the pet food in Example 1 is 1:9.1 and is completely different from the ratio of the hardness of the core to the covering portion of the pet food in Comparative Examples 1 and 2. Accordingly, it is understood that the pet food in Example 1 is pet food in which two different types of chewy textures can be enjoyed.

In addition, the core of the pet food in Example 1 had a hardness of 32.3 N which was greatly softer than that of pet food in the related art and had an aggregability of 0.62 and an elasticity of 0.94 which were similar to those of pet food in the related art. Therefore, the pet food in Example 1 has a core which was easily eaten by pets with weak biting force such as young pets, small pets, and old pets and was able to be bitten for a long period of time.

It is considered that the core of the pet food in Example 1 contained a large amount of voids and thus the density thereof was 0.042 g/cm$^3$, which was low. For this reason, the core was softer than pet food in the related art and had elasticity which was similar to that of pet food in the related art.

The respective configurations and the combinations of those configurations in the respective embodiments described above are merely examples and additions, omission, substitutions, and other modifications of the configurations are possible within the range not departing from the scope of the present invention. Further, the present invention is not limited to the respective embodiments, but by the scope of claims.

Industrial Applicability

The pet food according to the present invention can be widely applied in the field of feed for pets.

Reference Signs List

10, 20: Pet food
11, 21: Core
12, 22: Covering portion
A: Thickness of covering portion
B: Portion to be measured with respect to core
C: Portion to be measured with respect to covering portion in state of covering core
O: Portion obtained by covering core with at least two layers of covering portion
P: Surface in which plunger is brought into contact with pet food

**Claims**

1.  Pet food comprising:

    a core; and
    a covering portion,
    wherein the ratio of the hardness of the covering portion to the core is 2 or greater.

2.  The pet food according to claim 1,
    wherein the hardness of the core is in the range of 9.8 N to 392 N, and
    the hardness of the covering portion is in the range of 49 N to 980 N.

3.  The pet food according to claim 1 or 2, wherein the core contains voids.

4.  The pet food according to any one of claims 1 to 3, wherein the value of the ratio of an aggregability (A) of the core to a hardness (H) of the core is in the range of 0.003 to 0.03.

5.  The pet food according to any one of claims 1 to 4,
    wherein the hardness (H) of the core is in the range of 9.8 N to 392 N, and
    the aggregability (A) thereof is in the range of 0.5 to 0.9.

6.  The pet food according to any one of claims 1 to 5, wherein the value of the ratio of an elasticity (T) of the core to a hardness (H) of the core is in the range of 0.01 to 0.2.

7.  The pet food according to any one of claims 1 to 6,
    wherein the hardness (H) of the core is in the range of 9.8 N to 392 N, and
    the elasticity (T) thereof is in the range of 0.5 to 1.0.

8.  The pet food according to any one of claims 1 to 7, wherein the moisture content of the core is in the range of 10.0% by weight to 20.0% by weight.

9.  The pet food according to any one of claims 1 to 8, wherein the density of the core is in the range of 0.02 g/cm$^3$ to 0.1 g/cm$^3$.

10. The pet food according to any one of claims 1 to 9, wherein at least a part of the core extends from the covering portion.

11. The pet food according to any one of claims 1 to 10, wherein the core is in the form of a rod.

12. The pet food according to any one of claims 1 to 11, wherein the ratio of the covering portion to the entirety of the pet food is 50% by weight or greater.

13. The pet food according to any one of claims 1 to 12, wherein the core contains 30.0% by weight or greater of cereals, 1.0% by weight or greater of processed starch, and 5.0% by weight or greater of a humectant.

**14.** The pet food according to any one of claims 1 to 13, wherein the covering portion contains glycerin and propylene glycol.

**15.** The pet food according to any one of claims 1 to 14, wherein the covering portion contains at least one raw ingredient selected from a group consisting of chicken, beef, pork, fish, and venison.

**16.** A method of producing pet food according to any one of claims 1 to 15, comprising:

a process of forming and swelling a core;
a process of performing a heat treatment on the formed and swollen core;
a process of forming a covering portion before covering;
a process of covering the core to which the heat treatment is applied with the covering portion before covering; and
a process of performing a heat treatment on the entirety of the pet food after the core is covered with the covering portion.

FIG. 1

FIG. 2

FIG. 3

FIG. 4A

FIG. 4B

FIG. 4C

FIG. 5A

FIG. 5B

FIG. 6

## INTERNATIONAL SEARCH REPORT

| International application No. |
|---|
| PCT/JP2014/067368 |

A. CLASSIFICATION OF SUBJECT MATTER
*A23K1/18*(2006.01)i, *A23K1/10*(2006.01)i

According to International Patent Classification (IPC) or to both national classification and IPC

B. FIELDS SEARCHED

Minimum documentation searched (classification system followed by classification symbols)
A23K1/00-3/06

Documentation searched other than minimum documentation to the extent that such documents are included in the fields searched
Jitsuyo Shinan Koho          1922-1996   Jitsuyo Shinan Toroku Koho   1996-2014
Kokai Jitsuyo Shinan Koho    1971-2014   Toroku Jitsuyo Shinan Koho   1994-2014

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2009-112313 A  (Kal Kan Foods, Inc.),<br>28 May 2009 (28.05.2009),<br>paragraphs [0121], [0150], [0152] to [0155];<br>fig. 1, 6<br>& JP 2002-506620 A        & US 6117477 A<br>& US 6254910 B1           & US 2001/0014360 A1<br>& US 2002/0022079 A1      & US 2005/0064073 A1<br>& EP 1063897 A            & EP 1388293 A1<br>& WO 1999/047000 A1       & CN 1301134 A<br>& KR 10-0438860 B | 1,2,4-9,11,<br>12,15 |

| ☒ | Further documents are listed in the continuation of Box C. | | ☐ | See patent family annex. |

\* Special categories of cited documents:
"A" document defining the general state of the art which is not considered   to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 04 September, 2014 (04.09.14) | 16 September, 2014 (16.09.14) |

| Name and mailing address of the ISA/<br>    Japanese Patent Office | Authorized officer |
|---|---|
| Facsimile No. | Telephone No. |

Form PCT/ISA/210 (second sheet) (July 2009)

**INTERNATIONAL SEARCH REPORT**

| International application No. |
| --- |
| PCT/JP2014/067368 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X<br>Y | NEO Sasami Maki Mocchimochi Cheese-aji 10 Hon, Amazon, [online], 21 May 2013 (21.05.2013), [retrieval date 04 September 2014 (04.09. 2014)], Internet <URL:http://www.amazon.co.jp/ NEO-%E3%82%B5%E3%82%B5%E3%83%9F%E5%B7%BB%E3%81% 8D%E3%82%82%E3%81%A3%E3%81%A1%E3%82%82%E3%81% A1-%E3%83%81%E3%83%BC%E3%82%BA%E5%91%B3-10%E6% 9C%AC/dp/B00CWYZP2A> | 1-12,15<br>14,16 |
| X<br>Y | Gin no Sara Kyo no Gohobi Sasami Maki Soft Bar Kogataken-yo, Unicharm Pet Care, [online], 25 August 2011 (25.08.2011) Archive, [retrieval date 04 September 2014 (04.09.2014)], Internet <URL:https://web.archive.org/web/ 20110825092146/http://pet.unicharm.co.jp/dog/ detail/dog_4520699687512/> | 1-13,15<br>14,16 |
| Y | JP 5038041 B2  (Yamahisa Co., Ltd.), 03 October 2012 (03.10.2012), paragraphs [0008], [0015], [0017] to [0018]; fig. 1<br>& CN 101341936 A       & KR 10-2009-0006714 A<br>& TW 200901896 A | 14 |
| Y | Microfilm of the specification and drawings annexed to the request of Japanese Utility Model Application No. 132096/1986(Laid-open No. 38787/1988)<br>(Yukie NAKATA), 12 March 1988 (12.03.1988), specification, page 3, lines 2 to 11<br>& GB 2194426 A       & DE 3724993 A<br>& FR 2603168 A | 16 |
| A | JP 2006-166794 A  (Inaba Foods Co., Ltd.), 29 June 2006 (29.06.2006), entire text; all drawings<br>(Family: none) | 1-16 |
| A | US 2007/0020355 A1  (Johannes P. Schlebusch), 25 January 2007 (25.01.2007), entire text; all drawings<br>& EP 1745703 A1       & DE 102005034568 A<br>& AU 2006203071 A | 1-16 |
| A | US 2010/0129498 A1  (Donald Barnvos), 27 May 2010 (27.05.2010), entire text; all drawings<br>& US 2008/0003338 A1    & WO 2006/128110 A2<br>& MX 2007014982 A       & CA 2829908 A | 1-16 |

Form PCT/ISA/210 (continuation of second sheet) (July 2009)

**INTERNATIONAL SEARCH REPORT**

International application No.

PCT/JP2014/067368

C (Continuation).    DOCUMENTS CONSIDERED TO BE RELEVANT

| Category* | Citation of document, with indication, where appropriate, of the relevant passages | Relevant to claim No. |
|---|---|---|
| A | US 2010/0260905 A1  (Glen S.AXELROD), 14 October 2010 (14.10.2010), entire text; all drawings & JP 2012-523335 A        & EP 2419254 A & WO 2010/135215 A1     & CA 2756682 A & AU 2010236797 A | 1-16 |

Form PCT/ISA/210 (continuation of second sheet) (July 2009)

**EP 3 037 002 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013138503 A
- JP 2000175627 A

**Non-patent literature cited in the description**

- **SZCZESNIAK, A. S.** *J. Food Sci.,* 1963, vol. 28, 385
- **SZCZESNIAK, A. S. ; BLANDT, M. A. ; FREIDMAN, H. H.** *J. Food Sci.,* 1963, vol. 28, 397